# EUROPÄISCHE PATENTSCHRIFT

(11) **EP 0 849 127 B1**
(45) Veröffentlichungstag und Bekanntmachung des Hinweises auf die Patenterteilung: **11.01.2006**
(21) Anmeldenummer: 97121021.6
(22) Anmeldetag: 29.11.1997
(51) Int. Cl.: B60R 21/20, B62D 1/04

(54) **Lenkrad mit eingebautem Airbag**
Steering wheel with built-in air bag
Volant de direction avec coussin gonflable

(30) Priorität: 21.12.1996 DE 19653798
(43) Veröffentlichungstag der Anmeldung: 24.06.1998
(73) Patentinhaber: TRW Automotive Safety Systems GmbH, 63743 Aschaffenburg (DE)
(72) Erfinder: Kreuzer, Martin, 63839 Kleinwallstadt (DE); Tschöp, Winfried, 97892 Kreuzwertheim (DE); Liesenfeld, Udo, 63773 Goldbach (DE)
(74) Vertreter: Degwert, Hartmut

(56) Entgegenhaltungen:
- EP-A- 0 648 661
- WO-A-95/23712
- WO-A-97/30871
- US-A- 5 222 415
- US-A- 5 243 877

## Beschreibung

Die Erfindung betrifft ein Lenkrad für Kraftfahrzeuge mit integriertem Airbag, gemäß dem oberbegriff des Anspruchs 1.

Derartige Lenkräder sind seit der Einführung des Airbags in den verschiedensten Ausführungsformen realisiert worden. Verständlicherweise ist man zunächst von der weit verbreiteten Technik zur Herstellung von Lenkrädern ausgegangen, wonach das metallische Lenkradskelett zumindest am Lenkradkranz mit einer Umkleidung aus geschäumtem Kunststoff versehen wird, die entweder als sog. Integralschaum von sich aus eine dichte äußere Schicht mit guten haptischen Eigenschaften aufweist oder aber mit Leder oder einer lederähnlichen Kunststoffschicht ummantelt ist. In ähnlicher Weise wurde dann auch der das Airbag-Modul aufnehmende zentrale Bereich des Lenkrades ausgebildet, wobei viele Vorschläge bekannt geworden sind, die sich mit der Abdeckkappe für den Airbag befassen und versuchen, die teilweise gegenläufigen Forderungen funktional zufriedenstellend und herstellungstechnisch günstig zu erfüllen.

Infolge des internationalen Wettbewerbs verlangen die Automobilhersteller von den Zulieferern in steigendem Maße komplette Bauteile, die einerseits wenig Montagearbeit erfordern, andererseits aber immer komplizierter werden, weil sie immer mehr Funktionen erfüllen müssen. Lenkräder werden mit allen möglichen Schaltern und Tastern ausgestattet, damit der Fahrer sämtliche Bedienfunktionen des Radios, die verschiedenen Fahrzeugbeleuchtungen, die automatischen Fensterheber u.s.w. betätigen kann, ohne die Hand vom Lenkrad nehmen zu müssen. Alle diese Schalter und Taster müssen bei der Ausgestaltung des Lenkrades und seiner Umkleidung berücksichtigt und so ausgeführt werden, daß sie einerseits den erforderlichen Bewegungsspielraum aufweisen, andererseits aber ästhetisch und haptisch befriedigend integriert sind.

Bei der gattungsgemäßen EP 0648 661 A1 ist vorgesehen, daß zuerst ein zentrales Lenkradteil mit Nabe, Speichenstümpfen, Airbag und anderen Funktionsteilen mit der Lenksäule verbunden wird, daß dann die rückwärtige Abdeckung an diesem Lenkradteil befestigt wird und daß schließlich das periphere Lenkradteil mit Lenkradkranz. äußeren Speichenstümpfen und Abdeckung für das Airbag-Modul an dem zentralen Lenkradteil befestigt wird, wobei überlappende Enden der Speichenstümpfe vorgesehen sind, die mittels rückwärtig eingeführter Schrauben miteinander verbunden werden. Alternativ können auch zuerst das zentrale Lenkradteil und die rückwärtige Abdeckung verbunden und dann auf die Lenksäule aufgesetzt werden. Dabei und bei einer eventuellen Demontage des Lenkrades können die Befestigungsmittel mit einem Werkzeug durch eine Öffnung in der rückwärtigen Abdeckung erreicht werden.

Als nachteilig wird bei beiden Austührungsformen angesehen, daß noch ein verhältnismäßig großer Montageaufwand erforderlich ist und daß die beiden Lenkradteile, die für den Transport und für die Lagerung zweckmäßigerweise in ihrer Endform miteinander verschraubt sind, bei der Montage zunächst wieder auseinandergenommen werden müssen.

Bei einer anderen Ausführungsform (ES-U-9303374) ist vorgesehen, daß ein zentrales Nabenteil mit daran befestigtem Airbag-Modul aber ohne besondere rückwärtige Kunststoffabdeckuna mit der Lenksäule verbunden wird und daß dann das einstückig mit Innenring. Speichen, Lenkradkranz sowie Umkleidung und integrierter Abdeckung für das Airbag-Modul zusammengesetzte Lenkrad über rückseitig einzuführende Schrauben mit dem Nabenteil verbunden wird. Hier werden der zu hohe Anteil bei der Endmontage und der Aufwand bei einer eventuellen Demontage bemängelt.

Das gilt auch für die dritte und vierte Ausführungsform (WO 95/23712A1 sowie EP 0691245A1), bei der wieder ein Nabenteil mit Airbag-Modul und ein einstückiges Lenkrad mit Innenring. Speichen, Lenkradkranz. Umkleidung und integrierter Abdeckung für das Airbag-Modul vorgesehen ist und Unterschiede nur hinsichtlich der Befestigungsmittel zum Verbinden von Lenkrad und Lenksäule bestehen. In allen Fällen ist zwar der vom Fahrer zu umfassende Teil des Lenkrades fertigungstechnisch verhältnismäßig günstig gestaltet, nicht aber der für die Endmontage maßgebliche Befestigungsteil, so daß - soweit ersichtlich - bisher keiner der bekannten Versionen in die Serienproduktion eingegangen ist. Das mag nicht zuletzt daran liegen, daß der Befestigungsteil zugunsten einer einfachen Herstellung der haptisch relevanten Lenkradteile entwicklungstechnisch zurückgeblieben ist.

Der Erfindung liegt die Aufgabe zugrunde, das gattungsmäßige Lenkrad so weiterzubilden, daß der erreichte fertigungstechnische Standard erhalten bleiben kann, daß die Montage der verschiedenen Teile für diverse Zusatzfunktionen am Lenkrad einfach und variabel gestaltet werden kann und daß insbesondere das gesamte Lenkrad als einteiliges Bauteil transportiert, gelagert und in einfachster Weise auf der Lenksäule montiert und ggf, auch wieder demontiert werden kann.

Zur Lösung dieser Aufgabe ist erfindungsgemäß vorgesehen, daß das Lenkrad aus einem Lenkradskelett und einer zweischaligen Ummantelung besteht, wobei
- das Lenkradskelett einen an der Lenksäule zu befestigenden Nabenbereich aufweist.
- am Lenkradskelett ein Airbag-Modul befestigt ist.
- die Ummantelung aus einer Oberschale mit Airbagabdeckung und einer Unterschale mit zentraler Öffnung im Nabenbereich besteht und
- Ober- und Unterschale längs einer Teilungsfläche miteinander verbunden sind.

Der Erfindung liegt die Erwägung zugrunde, daß man hinsichtlich der Anordnung und Montage des Airbag-Moduls sowie der anderen, am Lenkrad anzubringenden Funktions-teile erhebliche Freiheitsgrade gewinnt, wenn man eine im wesentlichen dreiteilige Lenkradform vorsieht, wobei das metallische Skelett als Träger für alle zu montierenden Bauteile dient und wobei die aus Kunststoff herzustellenden Ober- und Unterschalen das Lenkrad und alle daran befestigten Bauteile sandwichartig umschließen, Auf diese Weise kann ein fertiges Lenkrad erstellt werden, das bei der Endmontage nur noch auf die Lenksäule aufgesteckt und mit der Überwurfmutter befestigt werden muß, wobei man auf die übliche Kerbverzahnung mit Konus zwischen Lenkradnabe und Lenksäule nicht verzichten muß. Auch für den elektrischen Teil kommt man dabei mit einer einfachen Steckverbindung aus.

Die erfindungsgemäße Konzeption hat den weiteren Vorteil, daß das metallische Lenkradskelett mit den daran befestigten, teilweise wärmeempfindlichen Bauteilen nicht mehr in eine Spritzgußform eingelegt werden muß und daß die Ober- und Unterschalen als eigenständige Bauteile je für sich hergestellt werden können. Dadurch gewinnt man Freiheitsgrade für die zu verwendenden Kunststoffe, so daß man auch leichter unterschiedliche Kunststoffe und aus unterschiedlichen Kunststoffkomponenten zusammengesetzte Schalen realisieren kann. Statt des Einschäumens ist eine mechanische Befestigung zwischen den Schalen und dem Lenkradskelett vorgesehen, was weitere Freiheitsgrade bei der Gestaltung der Schalenformen mit sich bringt. Schließlich hat man bei der Verbindung der Schale miteinander bzw. mit dem Lenkradskelett die Möglichkeit, auf alle geläufigen Verbindungsarten zurückzugreifen und die für den jeweiligen Fall günstigste auszuwählen.

Vorteilhafte Ausgestaltungen und Abwandlungen des Erfindungsgedankens sind in den Unteransprüchen 2 bis 22 beschrieben. Weitere Einzelheiten und Vorteile werden anhand der in den Figuren 1 bis 7 dargestellten Ausführungsbeispiele näher erläutert. Es zeigen:
- Fig. 1: eine Explosionszeichnung einer Ausführungsform der Erfindung
- Fig. 2: eine zusammengesetzte Ausführungsform in Ansicht und zwei Schnitten
- Fig. 3: in vergrößerter Darstellung einen Schnitt durch eine Ausführungsform des Lenkradkranzes
- Fig. 4: in vergrößerter Darstellung einen Schnitt durch eine andere Ausführungsform des Lenkradkranzes
- Fig. 5: eine dritte Ausführungsform als Schnitt durch Speiche und Lenkradkranz
- Fig. 6: eine vierte Ausführungsform als Schnitt durch den Lenkradkranz
- Fig. 7: eine weiteres Lenkrad im Schnitt durch Speiche und nkradkranz.

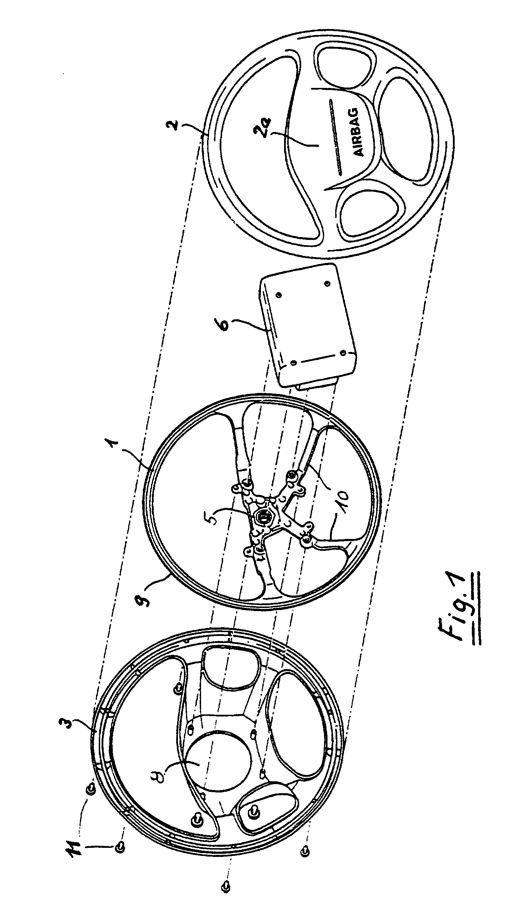

Bei dem Ausführungsbeispiel gemäß Fig. 1 besteht das Lenkrad aus einem Lenkradskelett 1 mit Nabenbereich 5, Speichen 10 und Lenkradkranz 9. einem Airbag-Modul, einer Oberschale 2 mit Airbag-Abdeckung 2a und einer Unterschale 3 mit zentraler Öffnung 8. Das Lenkradskelett 1 ist als Druckgußteil ausgeführt und zur Befestigung des Airbag-Moduls 6 eingerichtet. Außerdem sind Schrauben 11 vorgesehen, um Unterschale 3 und Oberschale 2 miteinander verbinden zu können. Dabei kann das Lenkradskelett allein durch eine entsprechende formschlüssige Ausgestaltung zwischen den beiden Schalen gehalten und eingeklemmt sein oder aber zusätzlich mittels Durchgangsbohrungen für die Schrauben 11 relativ zu den Schalen fixiert werden.

Im vorliegenden Fall sind vier sich trichterförmig vom Lenkradkranz 9 zum Nabenbereich 5 erstreckende Speichen 10 vorgesehen, und dementsprechend in beiden Schalen 2. 3 vier speichenartige Bereiche, die in montiertem Zustand die Speichen 10 des Lenkradskeletts 1 umschließen und damit gleichzeitig vier Durchgriffsöffnungen bilden, durch die der Fahrer den Lenkradkranz 9 umfassen kann. Die Teilungsebene zwischen Unter- und Oberschale 2. 3 liegt ausschließlich in der Ebene des Lenkradkranzes 9. d.h. die Wandungsbereiche der Unterschale sind beidseitig der Speichen 10 bis auf die Höhe des Lenkradkranzes 9 hochgezogen. Da die Unterschale 3 somit insgesamt trichterförmig ausgebildet ist und die Ummantelung des Lenkradskelett 1 in den sich aus der Ebene des Lenkradkranzes 9 in Richtung auf die Lenksäule 4 erstreckenden Bereiche übernimmt, kann die Oberschale 2 relativ flach ausgeführt und die Teilungsfläche auf die Höhe des Lenkradkranzes gelegt werden.

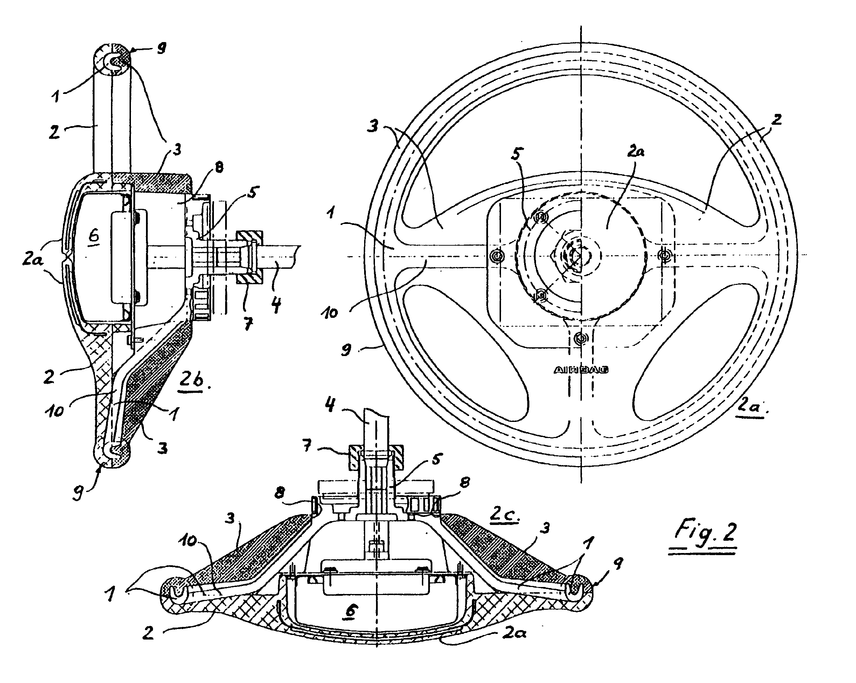

Fig. 2 zeigt ein zusammengebautes Lenkrad mit der prinzipiellen Ausführung gemäß Fig. 1. wobei Fig. 2a eine Draufsicht und die Figuren 2b und 2c zwei senkrecht zueinander und zur Zeichnungsebene der Fig. 2a verlaufende Schnitte zeigen.

Auf dem Lenkradskelett 1 mit Nabenbereich 5. Speichen 10 und Lenkradkranz 9 ist ein Airbag-Modul 6 befestigt. Das Lenkradskelett 1 ist mit Unter- und Oberschale 3. 2 ummantelt, wobei die Unterschale eine zentrale Öffnung 8 aufweist und die Oberschale 2 die Airbag-Abdeckung 2a umfaßt. Der Nabenbereich 5 ist in bekannter Weise mit einer Kerbverzahnung und einem Konus versehen und auf dem korrespondierenden Teil der Lenksäule aufgesteckt. Die axiale Verspannung erfolgt mit einer Überwurfmutter 7. die sich auf einem umlaufenden Anschlag an der Lenkradsäule 4 abstützt und auf ein außen am Nabenbereich 5 ausgebildetes Gewinde aufgeschraubt ist.

Diese Art der Befestigung erlaubt es, in Verbindung mit der erfindungsgemäßen zweischaligen Ummantelung 2, 3 des Lenkradskeletts 1 das Lenkrad insgesamt als einteiliges Bauteil auszuführen, das beim Transport und bei der Lagerung einfach zu handhaben ist und keine besonderen Schutzmaßnahmen erfordert. Das einteilige Lenkrad kann direkt in die Endmontage einfließen und ist sehr einfach zu befestigen. Damit ist ein Lenkrad geschaffen, das mit allen derzeit üblichen und geplanten Zusatzfunktionen ausgestattet werden kann und das gleichwohl denkbar einfach zu handhaben und zu (de)montieren ist.

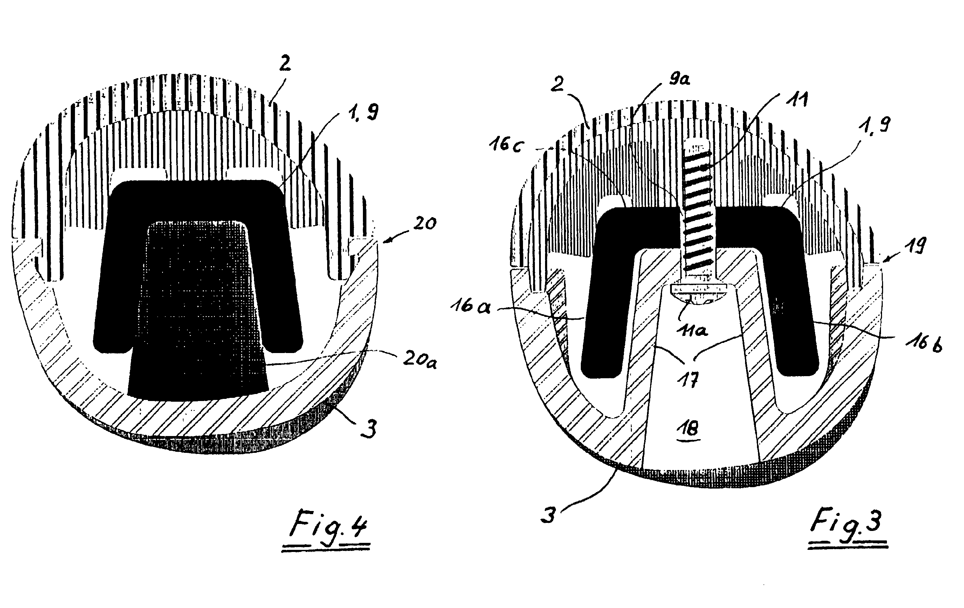

Fig. 3 zeigt als Schnitt durch den Lenkradkranz 9 eine erste Möglichkeit, wie Unter- und Oberschale 3. 2 miteinander verbunden werden können. Das Lenkradskefett 1 ist im Bereich des Lenkradkranzes 9 im Querschnitt U-förmig mit einem Basisbereich 16c und zwei leicht nach außen divergierenden Schenkeln 16a, 16b ausgebildet und weist eine Reihe von Durchgangslöchern 9a auf. Die beiden Schalen 2 und 3 sind gemäß der unterschiedlichen Schraffur aus mehreren Kunststoffkomponenten aufgebaut und können so den unterschiedlichen Anforderungen hinsichtlich Festigkeit und ästhetischen sowie haptischen Ansprüchen optimal angepaßt werden. Sie sind in der Teilungsfläche nach Art einer Nut- und Federverbindung formschlüssig aufeinander abgestimmt und mittels Schrauben 11 miteinander verbunden. Dabei liegt die Oberschale 2 bereichsweise am Lenkradkranz 9 an und weist entsprechende Bohrungen für die Schrauben 11 auf. Die Unterschale 3 greift mit einem im Querschnitt trapezförmigen Teil 17 in den im Querschnitt U-förmigen Lenkradkranz 9 ein. Sie besitzt Ausnehmungen 18, in denen die Schraubenköpfe 11a versenkt werden können und die ggf. mit einer nachträglich aufgebrachten Kunststoffschicht überdeckt werden können. Sie können aber auch offen bleiben, da sie auf der Unterseite des Lenkrades weder optisch noch haptisch stören.

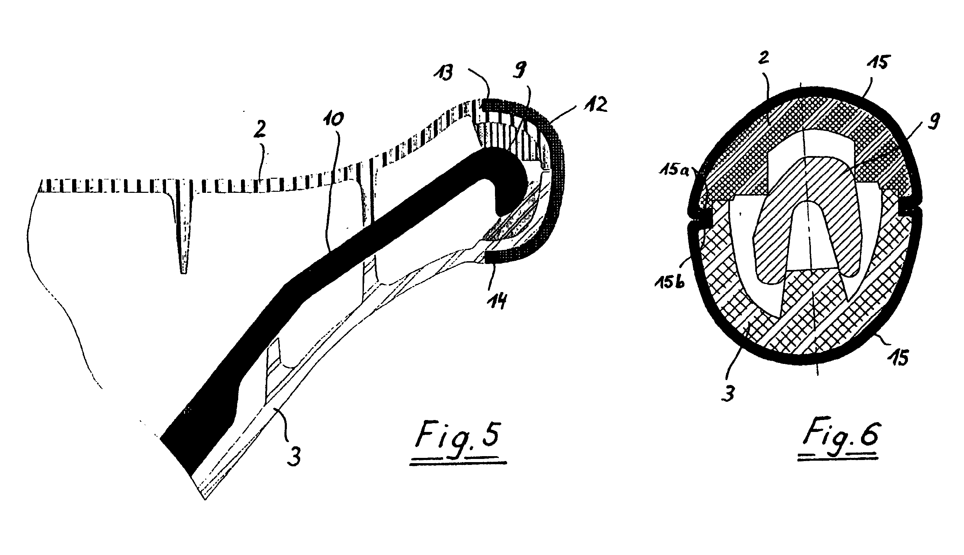

Bei der Ausführungsform gemäß Fig. 4 ist das Lenkradskelett 1 im Bereich des Lenkradkranzes 9 wiederum U-förmig mit leicht divergierenden Schenkeln ausgebildet. In diesem Fall sind Unter- und Oberschale 3. 2 jedoch mittels einer Schnappverbindung 20 formschlüssig miteinander verbunden, wobei ein elastisch verformbarer Körper 20a dafür sorgt, daß die Schnappverbindung 20 permanent unter Zugspannung steht.

Fig. 5 zeigt einen Schnitt durch eine Speiche 10 und durch den Lenkradkranz 9. Unter- und Oberschale 3. 2 liegen nur bereichsweise über Stege am Lenkradskelett an und werden mittels eines elastischen Rings 12 mit etwa halbkreisförmigem Querschnitt zusammengehalten, wobei durch Rezesse 13 und 14 dafür gesorgt ist, daß der Ring 12 außenseitig bündig mit den sich nach innen anschließenden Bereichen der beiden Schalen 2, 3 abschließt.

Fig. 6 zeigt eine Ausführungsform, bei der Ober- und Unterschale 2. 3 zumindest im Bereich des Lenkradkranzes 9 mit je einer Deckschicht 15 aus Leder oder dergl. umgeben sind. Die Ränder 15a, 15b der Deckschichten 15 sind im Bereich der Teilungsflächen nach innen umgelegt und zwischen den beiden Schalen 2, 3 eingeklemmt. Zwischen den Schalen 2, 3 ist eine formschlüssige Nut- und Federverbindung vorgesehen, die durch nicht dargestellte Schrauben zusammengehalten wird.

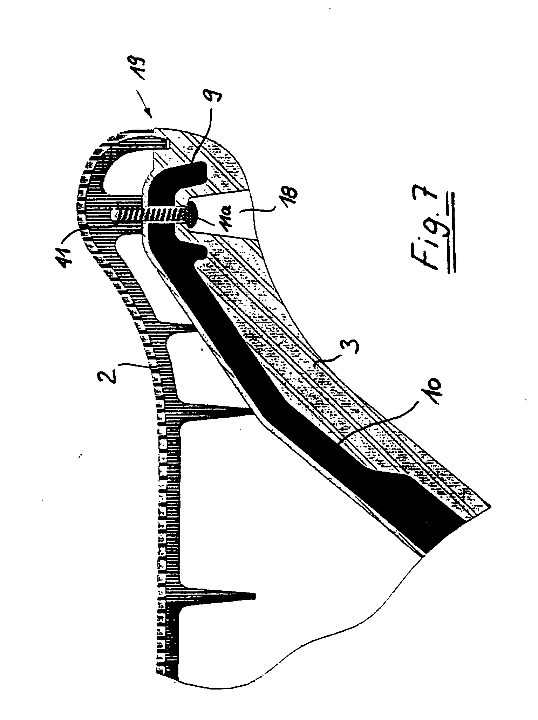

Fig. 7 zeigt ein lenkrad, bei dem das Lenkradskelett im Bereich der Speichen 10 und des Lenkradkranzes 9 vollständig in die Unterschale 3 eingebettet ist. Die Oberschale 2 ist mittels Nut- und Federverbindung 19 und Schrauben 11 mit der Unterschale 3 verbunden, wobei die Schraubenköpfe 11a wiederum in Ausnehmungen 18 versenkt sind.

Weitere Abwandlungen und Befestigungsarten liegen im Rahmen des Grundgedankens der Erfindung, wonach ein für die Endmontage geeignetes, einteiliges Lenkrad bereitgestellt wird, bei dem das Lenkradskelett mit allen Funktionsteilen zwischen Kunststoffteilen in Form von Halbschalen eingebettet ist.

## Patentansprüche

1. Lenkrad für Kraftfahrzeuge
mit integriertem Airbag,
wobei eine Abdeckung für den zentralen Airbag-Bereich einstückig mit einer sich daran nach außen anschließenden Ummantelung für die Lenkradspeichen und den Lenkradkranz ausgebildet ist
und wobei das Lenkrad einschließlich aller Zubehörteile eine fertige Baueinheit bildet, die bei der Endmontage mit der Lenksäule verbindbar ist,
wobei das Lenkrad ein Lenkradskelett (1) mit einem an der Lenksäule zu befestigenden Nabenbereich aufweist und wobei am Lenkradskelett (1) ein Airbag-Modul (6) befestigt ist,
**dadurch gekennzeichnet, daß** das Lenkrad aus dem Lenkradskelett (1) und einer zweischaligen Ummantelung (2, 3) besteht,
wobei die Ummantelung aus einer Oberschale (2) mit Airbagabdeckung (2a) und einer Unterschale (3) mit zentraler Öffnung (8) im Nabenbereich (5) besteht,
Ober- und Unterschale jeweils eigenständige, vor dem Zusammenbau des Lenkrads nicht mit dem Lenkradskelett verbundene Bauteile sind und Ober- und Unterschale (2, 3) längs einer Teilungsfläche miteinander verbunden sind.

2. Lenkrad nach Anspruch 1, **dadurch gekennzeichnet, daß** das Lenkradskelett (1) aus einem metallischen Werkstoff besteht.

3. Lenkrad nach Anspruch 2. **dadurch gekennzeichnet, daß** das Lenkradskelett (1) einstuckig aus einem Druckgußteil besteht.

4. Lenkrad nach Anspruch 3. **dadurch gekennzeichnet, daß** das Druckgußteil aus einer AL- oder MG-Legierung besteht.

5. Lenkrad nach einem der Ansprüche 1 - 4, **dadurch gekennzeichnet, daß** die Ummantelung (2. 3) aus Kunststoff besteht.

6. Lenkrad nach Anspruch 5, **dadurch gekennzeichnet, daß** Ober - und/oder Unterschale (2. 3) aus einem Kunststoffspritzteil bestehen.

7. Lenkrad nach Anspruch 6, **dadurch gekennzeichnet, daß** Ober - und/oder Unterschale (2. 3) aus Hartschaum mit zumindest außenseitig geschlossener Oberfläche bestehen.

8. Lenkrad nach Anspruch 6. **dadurch gekennzeichnet, daß** Ober - und/oder Unterschale (2, 3) einen zwei- oder mehrschichtigen Autbau mit unterschiedlichen Kunststoffkomponenten aufweisen.

9. Lenkrad nach einem der Ansprüche 1 - 8, **dadurch gekennzeichnet, daß** die Teilungsfläche zwischen Ober- und Unterschale (2, 3) einen ersten ebenen Teil im Bereich des Lenkradkranzes (9), einen zweiten ebenen und zum ersten parallelen Teil im Bereich der Lenkradnabe (5) und zwischen erstem und zweitem Teil einen dritten trichterförmigen Teil im Bereich der Speichen (10) aufweist.

10. Lenkrad nach Anspruch 9, **dadurch gekennzeichnet, daß** Ober - und Unterschale (2. 3) längs der Teilungsfläche formschlüssig aufeinander und jedenfalls bereichsweise auf das Lenkradskelett (1) abgestimmt sind.

11. Lenkrad nach Anspruch 10. **dadurch gekennzeichnet, daß** Oher - und Unterschale (2. 3) längs der Teilungsfläche nach Art einer Nut-FederVerbindung (19) aufeinander abgestimmt sind.

12. Lenkrad nach einem der Ansprüche 10 oder 11. **dadurch gekennzeichnet, daß** Ober - und Unterschale (2. 3) durch im wesentlichen senkrecht zur Teilungsfläche angeordnete Schrauben oder Nieten (11) miteinander bzw. mit dem Lenkradskelett (1) verbunden sind.

13. Lenkrad nach Anspruch 9. **dadurch gekennzeichnet, daß** sich Schrauben oder Nieten (11) durch Ausnehmungen (12) im Lenkradkranz (9) erstrecken und in die Gegenschale eingreifen.

14. Lenkrad nach Anspruch 9, **dadurch gekennzeichnet, daß** Ober - und Unterschale (2. 3) längs der Teilungsfläche durch eine Schnappverbindung (20) miteinander verbunden sind,

15. Lenkrad nach Anspruch 9, **dadurch gekennzeichnet, daß** Ober - und Unterschale (2. 3) mittels eines an der Außenseite des Lenkradkranzes (9) angeordneten elastischen Rings (12) zusammengehalten werden.

16. Lenkrad nach Anspruch 15. **dadurch gekennzeichnet, daß** Ober - und Unterschale (2. 3) auf den elastischen Ring (12) abgestimmte Rezesse (13. 14) aufweisen und daß der elastische Ring (12) oberflächenbundig mit den angrenzenden Bereichen der Ober- und Unterschale (2, 3) abschließt.

17. Lenkrad nach Anspruch 9. **dadurch gekennzeichnet, daß** Ober - und Unterschale (2, 3) mit einer Deckschicht (15) aus Leder versehen sind.

18. Lenkrad nach Anspruch 17. **dadurch gekennzeichnet, daß** die Ränder (15a, 15b) der Deckschicht (15) in der Teilungsfläche nach innen abgewinkelt und zwischen Ober- und Unterschale (2. 3) eingeklemmt sind.

19. Lenkrad nach Anspruch 9, **dadurch gekennzeichnet, daß** der Lenkradkranz (9) im Querschnitt U-förmig mit in Richtung Unterschale (3) divergierenden Seitenschenkeln (16a. 16b) ausgebildet ist und daß die Unterschale (3) mit einem im Querschnitt trapezförmigen Teil (17) in den U-förmigen Querschnitt des Lenkradkranzes (9) eingreift.

20. Lenkrad nach Anspruch 19. **dadurch gekennzeichnet, daß** die Köpfe (11a) der Schrauben oder Nieten (11) gemäß den Ansprüchen 12 und 13 in Ausnehmungen (18) des im Querschnitt trapezförmigen Teils (17) der Unterschale (3) angeordnet sind und daß sich die Schrauben oder Nieten (11) durch die Basis (16c) des U-förmigen Querschnitts des Lenkradkranzes (9) erstrecken.

21. Lenkrad nach Anspruch 1, jedoch mit der Maßgabe, daß das Lenkradskelett (1) im Bereich der Speichen (10) und des Lenkradkranzes (9) in die Unterschale (3) eingeformt ist und daß die Oberschale (2) nach einem der Ansprüche 10 - 19 formschlüssig auf die Unterschale (3) abgestimmt und mit ihr verbunden ist.

22. Lenkrad nach einem der Ansprüche 1 - 21, **dadurch gekennzeichnet, daß** die Verbindung der Baueinheit "Lenkrad" mit der Lenksäule (4) mittels einer Überwurfmutter (7) erfolgt.

## Claims

1. A steering wheel for a motor vehicle,
comprising an integrated airbag,
a covering for the central airbag region being formed in one piece with a sheathing adjoining towards the outside for the steering wheel spokes and the steering wheel rim,
and the steering wheel inclusive of all accessory parts forming a finished structural unit which can be connected to the steering column during final assembly,
the steering wheel including a steering wheel skeleton (1) having a hub region to be fastened to the steering column, and an airbag module (6) being fastened to the steering wheel skeleton (1),
**characterized in that** the steering wheel consists of the steering wheel skeleton (1) and a two-shell sheathing (2, 3),
the sheathing consisting of an upper shell (2) with an airbag covering (2a) and a lower shell (3) with a central opening (8) in the hub region (5),
the upper and lower shells each being independent components not connected to the steering wheel skeleton prior to assembly of the steering wheel, and the upper and lower shells (2, 3) being connected to each other along a parting surface.

2. The steering wheel according to claim 1, **characterized in that** the steering wheel skeleton (1) consists of a metallic material.

3. The steering wheel according to claim 2, **characterized in that** the steering wheel skeleton (1) consists of a one-piece diecast part.

4. The steering wheel according to claim 3, **characterized in that** the diecast part consists of an Al or Mg alloy.

5. The steering wheel according to any of claims 1 - 4, **characterized in that** the sheathing (2, 3) consists of plastic.

6. The steering wheel according to claim 5, **characterized in that** the upper and/or lower shells (2, 3) consist of an injection molded plastic part.

7. The steering wheel according to claim 6, **characterized in that** the upper and/or lower shells (2, 3) consist of a rigid foam with a closed surface at least on the outside.

8. The steering wheel according to claim 6, **characterized in that** the upper and/or lower shells (2, 3) have a two-layer or multilayer structure with different plastic components.

9. The steering wheel according to any of claims 1 - 8, **characterized in that** the parting surface between the upper and lower shells (2, 3) has a first planar part in the region of the steering wheel rim (9), a second planar part, parallel to the first, in the region of the steering wheel hub (5) and, between the first and second parts, a third, funnel-shaped part in the region of the spokes (10).

10. The steering wheel according to claim 9, **characterized in that** the upper and lower shells (2, 3) are matched to each other in a form-fitting manner along the parting surface and, at least in some regions, are matched to the steering wheel skeleton (1).

11. The steering wheel according to claim 10, **characterized in that** the upper and lower shells (2, 3) are matched to each other along the parting surface in the manner of a tongue-and-groove joint (19).

12. The steering wheel according to either of claims 10 and 11, **characterized in that** the upper and lower shells (2, 3) are connected to each other and to the steering wheel skeleton (1) by screws or rivets (11) arranged substantially perpendicular to the parting surface.

13. The steering wheel according to claim 9, **characterized in that** screws or rivets (11) extend through clearances (12) in the steering wheel rim (9) and engage in the mating shell.

14. The steering wheel according to claim 9, **characterized in that** the upper and lower shells (2, 3) are connected to each other along the parting surface by a snap connection (20).

15. The steering wheel according to claim 9, **characterized in that** the upper and/or lower shells (2, 3) are held together by means of an elastic ring (12) arranged on the outer side of the steering wheel rim (9).

16. The steering wheel according to claim 15, **characterized in that** the upper and lower shells (2, 3) have recesses (13, 14) matched to the elastic ring (12) and that the elastic ring (12) terminates with its surface flush with the adjoining regions of the upper and lower shells (2, 3).

17. The steering wheel according to claim 9, **characterized in that** the upper and lower shells (2, 3) are provided with a cover layer (15) made of leather.

18. The steering wheel according to claim 17, **characterized in that** the borders (15a, 15b) of the cover layer (15) are angled inwards in the parting surface and are clamped in between the upper and lower shells (2, 3).

19. The steering wheel according to claim 9, **characterized in that** the steering wheel rim (9) is of a U-shaped design in cross section, with side legs (16a, 16b) diverging towards the lower shell (3), and that the lower shell (3) has a part (17) that is trapezium-shaped in cross section and that engages in the U-shaped cross section of the steering wheel rim (9).

20. The steering wheel according to claim 19, **characterized in that** the heads (11a) of the screws or rivets (11) according to claims 12 and 13 are arranged in clearances (18) of the part (17) of the lower shell (3) that is trapezium-shaped in cross section, and that the screws or rivets (11) extend through the base (16c) of the U-shaped cross section of the steering wheel rim (9).

21. The steering wheel according to claim 1, but with the proviso that the steering wheel skeleton (1) is molded into the lower shell (3) in the region of the spokes (10) and of the steering wheel rim (9), and that the upper shell (2) according to any of claims 10 - 19 is matched to the lower shell (3) in a form-fitting manner and is connected to it.

22. The steering wheel according to any of claims 1 - 21, **characterized in that** the connection of the "steering wheel" structural unit with the steering column (4) is effected by means of a union nut (7).

## Revendications

1. Volant de direction pour véhicules,
comprenant un airbag intégré,
un couvercle pour la région central d'airbag étant réalisée d'un seul tenant avec une enveloppe s'y raccordant vers l'extérieur pour les rayons du volant de direction et la couronne du volant de direction, et
le volant de direction formant une unité de construction complète y compris tous les accessoires, laquelle peut être reliée à la colonne de direction au montage final,
le volant de direction présentant un squelette (1) du volant de direction avec une région de moyeu à fixer sur la colonne de direction et un module d'airbag (6) étant fixé sur le squelette (1) du volant de direction,
**caractérisé en ce que** le volant de direction est constitué par le squelette (1) du volant de direction et par une enveloppe (2, 3) à deux coques,
l'enveloppe étant constituée par une coque supérieure (2) avec couvercle d'airbag (2a) et par une coque inférieure (3) avec ouverture (8) centrale dans la région de moyeu (5),
la coque supérieure et la coque inférieure étant chacune un composant indépendant qui n'est pas relié avec le squelette du volant de direction avant l'assemblage du volant de direction, et la coque supérieure (2) et la coque inférieure (3) étant reliées l'une à l'autre le long d'une surface de division.

2. Volant de direction selon la revendication 1, **caractérisé en ce que** le squelette (1) du volant de direction est en un matériau métallique.

3. Volant de direction selon la revendication 2, **caractérisé en ce que** le squelette (1) du volant de direction est constitué d'un seul tenant en une pièce moulée sous pression.

4. Volant de direction selon la revendication 3, **caractérisé en ce que** la pièce moulée sous pression est constituée par un alliage de Al ou de Mg.

5. Volant de direction selon l'une des revendications 1 à 4, **caractérisé en ce que** l'enveloppe (2, 3) est en matière plastique.

6. Volant de direction selon l'une des revendications 5, **caractérisé en ce que** la coque supérieure (2) et/ou la coque inférieure (3) sont constituées par une pièce moulée par injection en matière plastique.

7. Volant de direction selon la revendication 6, **caractérisé en ce que** la coque supérieure (2) et/ou la coque inférieure (3) sont constituées par de la mousse dure avec une surface fermée au moins sur la face extérieure.

8. Volant de direction selon la revendication 6, **caractérisé en ce que** la coque supérieure (2) et/ou la coque inférieure (3) présente(nt) une structure bicouche ou multicouche avec différents composants de matière plastique.

9. Volant de direction selon l'une des revendications 1 à 8, **caractérisé en ce que** la surface de séparation entre la coque supérieure (2) et la coque inférieure (3) présente une première partie plane dans la région de la couronne (9) du volant de direction, une deuxième partie plane et parallèle à la première partie dans la région du moyeu (5) du volant de direction et, dans la région des rayons (10), une troisième partie en forme d'entonnoir entre la première partie et la deuxième partie.

10. Volant de direction selon la revendication 9, **caractérisé en ce que** la coque supérieure (2) et la coque inférieure (3) sont adaptées l'une à l'autre par coopération de formes le long de la surface de division et, au moins dans certaines régions, elles sont adaptées au squelette (1) du volant de direction.

11. Volant de direction selon la revendication 10, **caractérisé en ce que** la coque supérieure (2) et la coque inférieure (3) sont adaptées l'une à l'autre le long de la surface de division à la manière d'une liaison à languette et rainure (19).

12. Volant de direction selon l'une des revendications 10 ou 11, **caractérisé en ce que** la coque supérieure (2) et la coque inférieure (3) sont reliées l'une à l'autre et au squelette (1) du volant de direction, respectivement, par des vis ou rivets (11) agencés sensiblement perpendiculairement à la surface de division.

13. Volant de direction selon la revendication 9, **caractérisé en ce que** les vis ou rivets (11) s'étendent à travers des évidements (12) dans la couronne (9) du volant de direction et s'engagent dans la coque antagoniste.

14. Volant de direction selon la revendication 9, **caractérisé en ce que** la coque supérieure (2) et la coque inférieure (3) sont reliées l'une à l'autre par une liaison par encliquetage (23) le long de la surface de division.

15. Volant de direction selon la revendication 9, **caractérisé en ce que** par une liaison par encliquetage (23) sont maintenues ensemble au moyen d'une bague (12) élastique agencée sur la face extérieure de la couronne (9) du volant de direction.

16. Volant de direction selon la revendication 15, **caractérisé en ce que** la coque supérieure (2) et la coque inférieure (3) présentent des creux (13, 14) adaptés à la bague élastique (12) et **en ce que** la bague élastique (12) se termine en affleurement avec la surface des régions adjacentes de la coque supérieure (2) et la coque inférieure (3).

17. Volant de direction selon la revendication 9, **caractérisé en ce que** la coque supérieure (2) et la coque inférieure (3) sont pourvues d'une couche de recouvrement (15) en cuir.

18. Volant de direction selon la revendication 17, **caractérisé en ce que** les bords (15a, 15b) de la couche de recouvrement (15) dans la surface de division sont coudés vers le bas et serrés entre la coque supérieure (2) et la coque inférieure (3).

19. Volant de direction selon la revendication 9, **caractérisé en ce que** la couronne (9) du volant de direction est réalisé avec une section transversale en forme de U avec des branches latérales (16a, 16b) qui divergent en direction de la coque inférieure (3) et **en ce que** la coque inférieure (3) s'engage avec une partie (17) à section transversale en forme de trapèze dans la section transversale en forme de U de la couronne (9) du volant de direction.

20. Volant de direction selon la revendication 19, **caractérisé en ce que** les têtes (11a) des vis ou rivets (11) selon les revendications 12 et 13 sont agencées dans des évidements (18) de la partie (18), à section transversale en forme de trapèze, de la coque inférieure (3), et **en ce que** les vis ou rivets (11) s'étendent à travers la base (16c) de la section transversale en forme de U de la couronne (9) du volant de direction.

21. Volant de direction selon la revendication 1, cependant sous réserve que le squelette (1) du volant de direction soit conformé dans la coque inférieure (3), dans la région des rayons (10) et de la couronne (9) du volant de direction, et que la coque supérieure (2) selon l'une des revendications 10 à 19 soit adaptée à la coque inférieure (3) et reliée à celle-ci.

22. Volant de direction selon l'une des revendications 1 à 21, **caractérisé en ce que** la liaison de l'unité de construction "volant de direction" avec la colonne de direction (4) a lieu au moyen d'un écrou d'accouplement (7).
